# EUROPÄISCHE PATENTSCHRIFT

(11) **EP 0 535 500 B1**
(45) Veröffentlichungstag und Bekanntmachung des Hinweises auf die Patenterteilung: **30.08.1995**
(21) Anmeldenummer: 92116139.4
(22) Anmeldetag: 21.09.1992
(51) Int. Cl.: H02G 3/08

(54) **Einbaugehäuse**
Flush mounted box
Boîte encastrée

(30) Priorität: 30.09.1991 DE 4132599
(43) Veröffentlichungstag der Anmeldung: 07.04.1993
(73) Patentinhaber: Schlegel, Ulrich, D-71522 Backnang (DE)
(72) Erfinder: Schlegel, Ulrich, D-71522 Backnang (DE)
(74) Vertreter: Weller, Wolfgang, Dr.rer.nat.

(56) Entgegenhaltungen:
- DE-B- 1 105 944
- FR-A- 585 055
- FR-A- 919 994

## Beschreibung

Die Erfindung betrifft ein Einbaugehäuse zum versenkten Einbau von Elektroinstallationen gemäß dem Oberbegriff des Anspruchs 1.

Müssen Gehäuse zum Einbau von Elektroinstallationen in Mauerwerk oder dgl. eingebracht werden, so wird herkömmlicherweise ein vorgefertigtes Kunststoff- oder Metallgehäuse in das Mauerwerk eingegipst. Für den Einbau größerer Elektroinstallationen werden hierzu meist einstückige Blechgehäuse mit abnehmbarer Frontplatte verwendet.

Um eine Reihe von Anwendungsfällen abzudecken, müssen Gehäuse in einer Vielzahl von Größen hergestellt und auf Lager gehalten werden.

Dies ist einerseits sehr kostenintensiv, andererseits ist bei der Bauausführung oder bei einem nachträglichen Einbau eines Gehäuses vielfach die notwendige Gehäusegröße gerade nicht zur Hand oder möglicherweise gerade nicht lieferbar.

Bei modernen Bauten ist darüberhinaus der genaue Platzbedarf bestimmter Elektroinstallationen bei der Bauerstellung teilweise noch gar nicht vollständig absehbar.

Durch die DE-B-1 105 944 ist ein Gehäuse bekannt geworden, das aus einzelnen Bauteilen, etwa einem Bodenblech, einem Frontblech und aus vier Seitenblechen mittels Winkelverbindern lösbar zusammengesetzt ist.

Ein derartiges Gehäuse läßt sich zwar einfach auf modulare Weise zusammensetzen, jedoch ist hierdurch keine Anpassung an örtliche Gegebenheiten ermöglicht, sofern ein Einbau in Mauerwerk oder dgl. vorgesehen ist.

Der Erfindung liegt demnach die Aufgabe zugrunde, ein vielseitig verwendbares Einbaugehäuse zu schaffen, das für verschiedene Anwendungsfälle adaptierbar ist und so eine Reduzierung der verschiedenen Gehäusevarianten auf wenige Grundformen ermöglicht.

Des weiteren soll eine möglichst präzise Anpassung an die jeweiligen Einbauverhältnisse ermöglicht werden.

Diese Aufgabe wird erfindungsgemäß dadurch gelöst, daß bei einem Einbaugehäuse der aus der DE-B-1 105 944 bekannten Art zumindest eine Stelleinrichtung zur Tiefeneinstellung von Zwischenböden oder Einbauteilen vorgesehen wird.

Das erfindungsgemäße Gehäuse ermöglicht so eine präzise Ausrichtung von Einbauteilen innerhalb des Gehäuses. Durch die Stelleinrichtung zur Tiefeneinstellung von Zwischenböden oder Einbauteilen wird unabhängig von der Einbaulage des Gehäuses eine präzise Ausrichtung der Frontplatte oder von Einbauteilen ermöglicht. Ferner können Zwischenböden vorgesehen werden, welche mittels der Stelleinrichtung in Bezug auf die Frontplatte oder in Bezug auf eine Frontfläche, zum Beispiel die Vorderfläche eines Mauerwerkes, in das das Gehäuse eingebaut ist, ausgerichtet werden können. Auf diese Weise wird auch der Einbau von Einbauelementen in Zwischenbauweise ermöglicht, so daß auf einem Zwischenboden die fest eingebauten und elektrisch verdrahteten Elemente befestigt werden, während die zugehörigen Bedienungs- oder Anzeigeelemente oder zusätzliche elektrische Verdrahtung auf der Frontplatte befestigt werden können, so daß diese in einfacher Weise abnehmbar ist, ohne elektrische Anschlüsse lösen zu müssen. Eine korrekte Einstellung der Abstände zwischen Zwischenböden und Frontplatte wird hierbei erfindungsgemäß durch die Stelleinrichtungen zur Tiefenverstellung ermöglicht. Desweiteren ist hierdurch auch der Einbau von Normeinschüben, zum Beispiel von 19 Zoll-Einschüben ermöglicht.

In besonders bevorzugter Weiterbildung ist das Einbaugehäuse ausgehend von einer quadratischen Grundform modulartig zur doppelten, dreifachen usw. Baugröße erweiterbar und mit anderen Gehäusen modulartig kombinierbar. Dabei können mehrere Gehäuse über Verbindungsstifte zu einer Gehäuseeinheit verbunden werden.

Bei manchen Elektroinstallationen ist eine gerätemäßige Trennung bestimmter Baugruppen erforderlich, z.B. Trennung einer Starkstromeinheit von einer Schwachstromeinheit oder dgl.. Auch solche Anwendungsfälle lassen sich besonders vorteilhaft durch Kombination verschiedener erfindungsgemäßer Gehäuseeinheiten abdecken.

In bevorzugter Ausführung weist jedes Winkelelement zwei Seitenschenkel auf, welche rechtwinklig zueinander gebogen sind, wobei sich jeder Seitenschenkel von der Frontseite aus gesehen in Richtung zum Bodenelement hin verbreitert.

Bei dieser Ausgestaltung ist durch die Form der Winkelelemente eine besonders hohe Stabilität gewährleistet. Durch die Verbreiterung der Seitenschenkel der Winkelelemente in Richtung auf den Boden hin ergibt sich eine keilartige Verbreiterung, welche eine besonders hohe Verwindungssteifheit gewährleistet. Auf diese Weise ist ein rechtwinkliger Aufbau gewährleistet, ohne daß hierzu zusätzliche Seitenverstrebungen vorgesehen werden müssen.

Die Stelleinrichtung kann in vorteilhafter Ausgestaltung eine Befestigungsplatte aufweisen, auf der ein Schlitten über ein Gewinde in Längsrichtung verstellbar angeordnet ist.

Dabei weist der Schlitten frontplattenseitig vorzugsweise einen Winkelansatz auf.

Hierdurch ist ein einfacher und mechanisch stabiler Aufbau gewährleistet. Zwischenböden lassen sich auf einfache Weise auf eine vorgegebene Entfernung z.B. von einer Frontplatte einstellen, um z.B. bei Tastern den notwendigen Einbauabstand sicherzustellen.

Die Eckverbinder weisen in vorteilhafter Weiterbildung der Erfindung jeweils im Eckbereich eine Gewindebohrung zur Schraubverbindung mit einer Frontplatte auf.

Bei dieser Ausgestaltung kann eine Frontplatte an den vier Eckbereichen auf das Gehäuse aufgeschraubt werden, wobei bei längeren Gehäusen zusätzlich an den Seitenwänden Winkelelemente aufgeschraubt sein können, so daß sich weitere Befestigungspunkte ergeben. Zur zusätzlichen Abstützung können die Seitenbleche frontplattenseitige Winkelansätze aufweisen.

Bei einer besonders bevorzugten Weiterbildung der Erfindung sind in die Gewindebohrungen der Eckverbinder Schutzleiterbuchsen oder Schutzleiterstecker zur Befestigung der Frontplatte und zur Erdung derselben einschraubbar.

Durch diese Maßnahme ist eine erheblich vereinfachte Montage der Frontplatte gewährleistet, da gleichzeitig beim Festschrauben der Frontplatte eine Schutzleiterverbindung entsteht.

In weiter bevorzugter Ausgestaltung weisen die Schutzleiterbuchsen und die Schutzleiterstecker jeweils einen in die Gewindebohrung eines Eckverbinders einschraubbaren Gewindestutzen auf, an den sich eine Schulter mit einem Außenmehrkant anschließt.

Die Schutzleiterbuchsen bzw. Schutzleiterstecker können auf diese Weise mit Hilfe des Außenmehrkantes in die Gewindebohrung des Eckverbinders eingeschraubt werden, wodurch die Frontplatte fixiert wird.

Bei einer weiteren Ausgestaltung schließt sich an den Außenmehrkant ein nach außen von der Frontplatte vorstehendes Kupplungsteil mit einer Sacklochbohrung zur Aufnahme eines Schutzleitersteckers an.

Bei manchen elektrischen Schaltungen muß die Erdung an bestimmten Stellen erfolgen, um Erdungsschleifen zu vermeiden. In manchen Fällen müssen verschiedene Erdungspunkte nacheinander ausprobiert werden, bis sich eine optimale Funktion ergibt. Bei der erfindungsgemäßen Ausführung können die Erdungspunkte nachträglich nach Aufschrauben der Frontplatte ohne weiteres geändert werden, ohne daß es hierzu eines nochmaligen Abnehmens der Frontplatte bedarf. In herkömmlicher Weise ist dagegen jeweils eine aufwendige Abnahme der Frontplatte und ein Umstecken der Schutzleiterfahnen bzw. der Schutzleiterstecker erforderlich, woraufhin die Frontplatte wieder aufgeschraubt werden muß.

Anstelle einer Schutzleiterbuchse mit einem Kupplungsteil kann natürlich auch ein Schutzleiterstecker mit einem nach außen von der Frontplatte vorstehenden Steckerteil mit Federzungen vorgesehen sein.

Um einen einwandfreien elektrischen Kontakt zu gewährleisten, ist in vorteilhafter Weiterbildung der Erfindung an der gewindeseitigen Schulter der Schutzleiterbuchse bzw. des Schutzleitersteckers eine Riffelung vorgesehen.

In weiter bevorzugter Ausgestaltung der Erfindung weisen die Seitenbleche Ausnehmungen zur Durchführung von Kabeln oder dgl. auf.

Auf diese Weise können Kabel aus dem Mauerwerk direkt in das Gehäuse eingezogen werden, ohne daß hierzu Bohrungen angebracht werden müssen. Darüberhinaus weist diese Anordnung besondere Vorteile auf, wenn mehrere Gehäuse zu einer größeren Gehäuseeinheit verbunden werden sollen. Da die Ausnehmungen zweckmäßigerweise an derart vorbestimmten Stellen der Seitenbleche angeordnet werden, daß sich unabhängig von der Lage miteinander verbundener Einzelgehäuse jeweils mindestens zwei Ausnehmungen gegenüberliegen, kann eine Verdrahtung auch zwischen einzelnen Gehäusemodulen in beliebiger Weise erfolgen.

Zur Durchführung von Kabeln können auf die einzelnen Ausnehmungen Platten mit Kabelführungen aufgeschraubt werden. Dagegen können nicht benötigte Ausnehmungen durch Abdeckbleche verschlossen werden.

Für manche Anwendungsfälle ist es zweckmäßig, eine Montageplatte vorzusehen. Dabei kann die Montageplatte auf das Bodenblech aufschraubbar sein.

Hierzu können am Bodenblech Schweißmuttern festgelegt sein.

Eine weitere Möglichkeit zur Befestigung von Einbauteilen ist dadurch gegeben, daß am Bodenblech oder an den Seitenblechen Rastschienen festlegbar sind.

Weitere Vorteile und Ausgestaltungen der Erfindung sind anhand der nachfolgenden Beschreibung unter Bezugnahme auf die Zeichnung erläutert. Es zeigen:
- Fig. 1: ein Gehäuse bestehend aus zwei miteinander verbundenen Gehäuseeinheiten in perspektivischer Darstellung;
- Fig. 2: ein Einbaugehäuse gemäß Fig. 1 in vereinfachter perspektivischer Darstellung;
- Fig. 3: eine Seitenansicht eines für das Gehäuse gemäß Fig. 2 geeigneten Zwischenbodens mit zwei Stelleinrichtungen zur Tiefeneinstellung;
- Fig. 4: eine Aufsicht der Anordnung gemäß Fig. 3;
- Fig. 5: eine Seitenansicht zweier zum Einbau in das Gehäuse gemäß Fig. 2 geeigneter Zwischenböden, die unabhängig voneinander über Stelleinrichtungen tiefenverstellbar sind;
- Fig. 6: eine Ansicht einer Stelleinrichtung gemäß Fig. 3 in vergrößerter Darstellung;
- Fig. 7: eine Ansicht des Schlittens der Stelleinrichtung gemäß Fig. 6;
- Fig. 8: eine Aufsicht des Schlittens gemäß Fig. 7;
- Fig. 9: eine Aufsicht eines Seitenbleches gemäß Fig. 1;
- Fig. 10: eine Seitenansicht des Seitenbleches gemäß Fig. 9;
- Fig. 11: einen Längsschnitt einer erfindungsgemäßen Schutzleiterbuchse in vergrößerter Darstellung;
- Fig. 12: eine Vorderansicht der Schutzleiterbuchse gemäß Fig. 11;
- Fig. 13: eine Seitenansicht eines erfindungsgemäßen Schutzleitersteckers in vergrößerter Darstellung;
- Fig. 14: eine Vorderansicht des Schutzleitersteckers gemäß Fig. 13;
- Fig. 15: eine Ansicht eines Bodenbleches;
- Fig. 16: eine Seitenansicht des Bodenbleches gemäß Fig. 15;
- Fig. 17: eine Aufsicht eines Eckverbinders gemäß Fig. 1 in vergrößerter Darstellung;
- Fig. 18: eine Seitenansicht des Eckverbinders gemäß Fig. 17;
- Fig. 19: eine Ansicht einer Zwischenplatte gemäß Fig. 1;
- Fig. 20: eine Seitenansicht der Zwischenplatte gemäß Fig. 19;
- Fig. 21: eine Seitenansicht eines Winkelbleches gemäß Fig. 1 in vergrößerter Darstellung;
- Fig. 22: eine Aufsicht des Winkelbleches gemäß Fig. 21;
- Fig. 23: eine Aufsicht einer Montageplatte;
- Fig. 24: eine Aufsicht zweier Montageplatten, die anstelle der Montageplatte gemäß Fig. 23 nebeneinander in ein Gehäuse einbaubar sind;
- Fig. 25: eine Ansicht einer Rastschiene zur Befestigung auf der Bodenplatte oder einer Montageplatte und
- Fig. 26: eine Seitenansicht der Rastschiene gemäß Fig. 25.

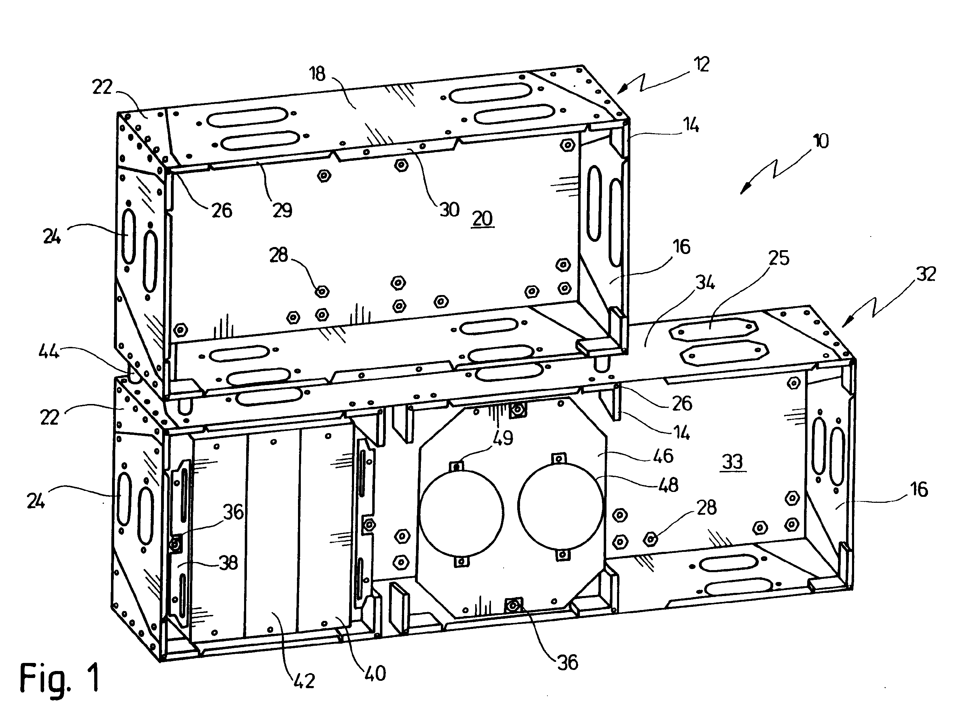

Ein erfindungsgemäßes Gehäuse, bestehend aus zwei Gehäuseeinheiten 12 und 32, ist insgesamt in Fig. 1 mit der Ziffer 10 bezeichnet.

Die Seitenabmessungen der Gehäuseeinheiten 12, 32 ergeben sich als vielfaches eines Grundmoduls mit quadratischer Grundfläche. Während die erste Gehäuseeinheit 12 die doppelte Breite des Grundmoduls einnimmt, nimmt die zweite Gehäuseeinheit 32 die dreifache Breite eines Grundmoduls ein.

Durch diesen modulartigen Aufbau können einzelne Gehäuseeinheiten 12, 32 in beliebiger Weise miteinander kombiniert werden und verschiedene Einbaumodule nebeneinander in einem Gehäuse eingebaut werden. Im dargestellten Fall sind die beiden Gehäuseeinheiten 12, 32 über Verbindungsstifte 44 zum Gehäuse 10 verbunden.

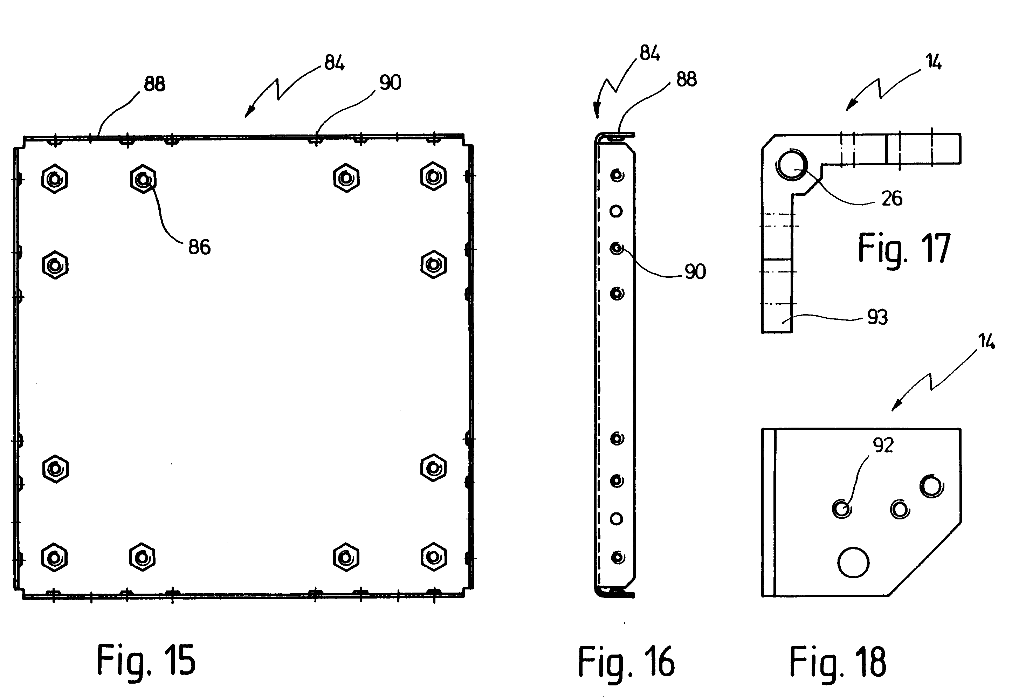

Jede Gehäuseeinheit 12, 32 weist eine rechteckige Bodenplatte 20, 33 auf, deren Ränder - wie nachstehend anhand der Fig. 15 und 16 näher erläutert - rechtwinklig nach vorn abgewinkelt sind.

An die Ränder der Bodenplatten 20 bzw. 33 sind eckseitig jeweils vier Winkelbleche 22 angeschraubt, die rechtwinklig von den Bodenplatten 20 bzw. 33 nach vorn vorstehen. Zwischen jeweils zwei Winkelblechen 22 ist jeweils ein Seitenblech 16, 18, 34 angeordnet, das eine etwa trapezförmige Grundform aufweist. Die Seitenbleche 16, 18, 34 sind bodenseitig mit den abgewinkelten Rändern der Bodenbleche 20 bzw. 33 verschraubt und an der gegenüberliegenden Seite, d.h. frontplattenseitig über Eckverbinder 14 mit den Winkelblechen 22 und den jeweils benachbarten Seitenblechen verschraubt.

In den Seitenblechen 16 der schmalen Seiten der beiden Gehäuseeinheiten 12, 32 sind jeweils zwei ovale Ausnehmungen 24 parallel nebeneinander angeordnet. In den Seitenwänden 18 der ersten Gehäuseeinheit mit doppelter Seitenlänge sind jeweils zwei Paare solcher ovaler Ausnehmungen 24 nebeneinander vorgesehen. In entsprechender Weise sind in dem langen Seitenblech 34 der zweiten Gehäuseeinheit 32 insgesamt sechs derartiger Ausnehmungen 24 vorgesehen, welche in Längsrichtung des Seitenbleches 34 verlaufen. Diese Öffnungen 24 sind als Kabeldurchführungen verwendbar, wozu zusätzliche Platten mit speziellen Kabeldurchführungen auf diese aufgeschraubt werden können. Nicht benötigte Öffnungen sind mittels Abdeckblechen 25 verschließbar.

An den Bodenplatten 20 bzw. 33 sind Schweißmuttern 28 zur Aufnahme von Gewinden vorgesehen, wobei jeweils für ein quadratisches Grundmodul eckseitig drei Schweißmuttern 28 vorgesehen sind.

Die schmalen Seitenbleche 16 sind an ihren frontplattenseitigen Rändern jeweils um 90° nach innen abgebogen. In gleicher Weise sind an dem Seitenblech 18 mit doppelter Breite jeweils zwei frontplattenseitige Bereiche 29, die sich etwa über ein Drittel der Gesamtlänge erstrecken, nach innen abgewinkelt. In dem dazwischen freibleibenden Bereich ist ein Befestigungswinkel 30 von innen an das Seitenblech 18 angeschraubt.

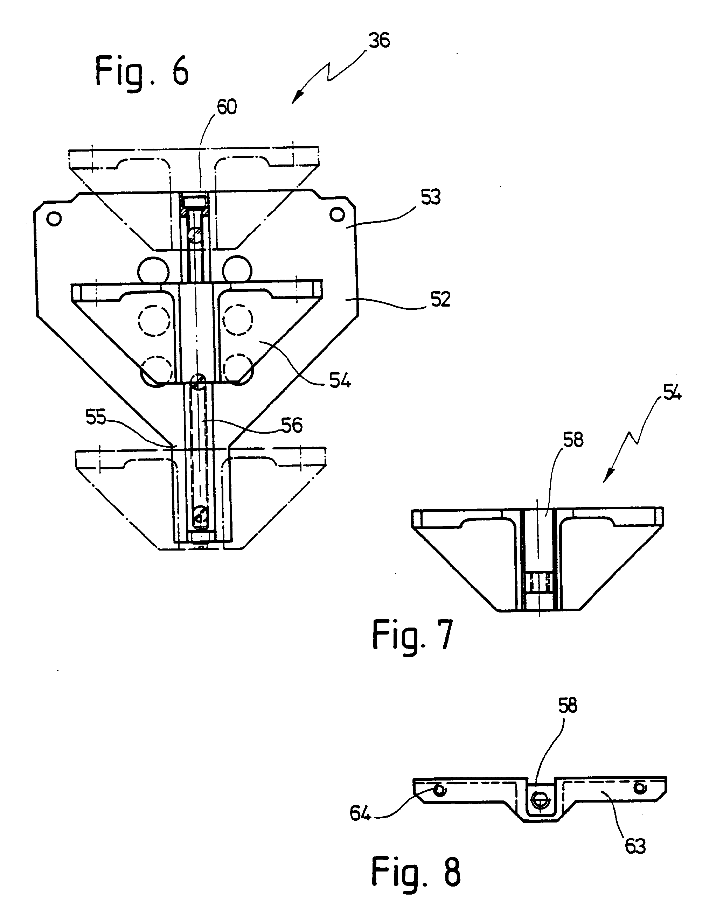

Verschiedene Einbauten sind an der unteren zweiten Gehäuseeinheit 32 schematisch dargestellt. Im linken Drittel der Gehäuseeinheit 32 ist ein 19-Zoll-Einbaurahmen 40 mit drei nebeneinander angeordneten 19-Zoll-Einschüben 42 eingebaut. Der 19-Zoll-Einbaurahmen 40 weist zwei seitliche Haltewinkel 38 auf, mittels derer der 19-Zoll-Einbaurahmen 40 an zwei seitlichen Stelleinrichtungen 36 zur Tiefeneinstellung festgelegt ist. Mittels der Stelleinrichtungen 36, die nachstehend anhand der Fig. 3 bis 8 näher erläutert sind, ist eine Tiefenverstellung des 19-Zoll-Einbaurahmens 40 ermöglicht.

Im mittleren Drittel der Gehäuseeinheit 32 ist eine Zwischenplatte 46 gleichfalls über zwei Stelleinrichtungen 36, welche jeweils an dem oberen Seitenblech 34 und dem unteren Seitenblech angeordnet sind, tiefenverstellbar festgelegt. An der Zwischenplatte 46 sind nebeneinander zwei zylindrische Steckdosenaufnahmen 48 über seitliche Klemmelemente 49 festgelegt.

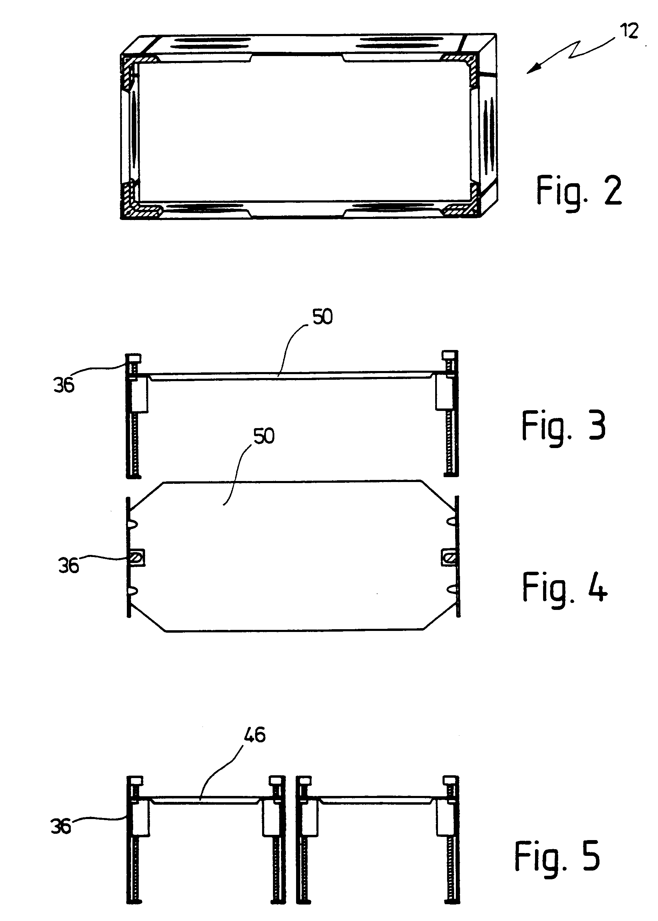

Fig. 2 zeigt die erste Gehäuseeinheit 12 nochmals in vereinfachter, perspektivischer Darstellung. Die Fig. 3 bis 5 zeigen Zwischenplatten mit Stelleinrichtungen, die zum Einbau in die Gehäuseeinheit geeignet sind. Eine erste Zwischenplatte 50, welche für den gesamten rechteckigen Querschnitt der Gehäuseeinheit 12 geeignet ist, ist seitlich an ihren schmalen Seiten jeweils an einer Stelleinrichtung 36 festgeschraubt. Die Eckbereiche der Zwischenplatte 50 sind abgeschrägt.

Fig. 5 zeigt zwei entsprechende Zwischenplatten 46, welche nebeneinander in die Gehäuseeinheit 12 eingebaut werden können. Hierzu sind beide Zwischenplatten 46 jeweils seitlich an Stelleinrichtungen 36 festgelegt, so daß eine getrennte Verstellung der Zwischenplatten 46 möglich ist.

Der Aufbau der Stelleinrichtung 36 ist aus den Fig. 6 bis 8 näher ersichtlich. Die Stelleinrichtung weist eine Befestigungsplatte 52 auf, welche von einem vorderen, frontplattenseitigen Bereich 53 aus in Richtung zu einem hinteren, bodenseitigen Bereich 55 hin abgeschrägt ist. Die Befestigungsplatte 52 weist somit eine etwa flügelartige Form auf. In Längsrichtung der symmetrisch aufgebauten Befestigungsplatte 52 ist ein Gewindestift 56 angeordnet, welcher jeweils am frontplattenseitigen Ende und am bodenseitigen Ende der Befestigungsplatte 52 drehbar festgelegt ist. Auf dem Gewindestift 56 ist ein Schlitten 54 über eine fest mit dem Schlitten 54 verbundene Mutter 58 längsverschieblich gehalten.

Der Schlitten 54 weist eine etwa trapezförmige Grundform auf und weist an seinem vorderen, frontplattenseitigen Ende einen Winkelansatz 63 mit Gewindebohrungen 64 zur Befestigung einer Zwischenplatte bzw. eines 19-Zoll-Einbaurahmens auf.

Durch Verdrehen des Gewindestiftes 56 mit Hilfe eines am vorderen Ende vorgesehenen Inbuskopfes 60 kann der Schlitten 54 aus der ausgezogen gezeichneten Mittelstellung entweder nach vorn in Richtung zur Frontplatte bis zu der strichpunktiert angedeuteten Endstellung oder nach hinten in Richtung zur Bodenplatte bis in die gleichfalls strichpunktiert angedeutete Endstellung verschoben werden.

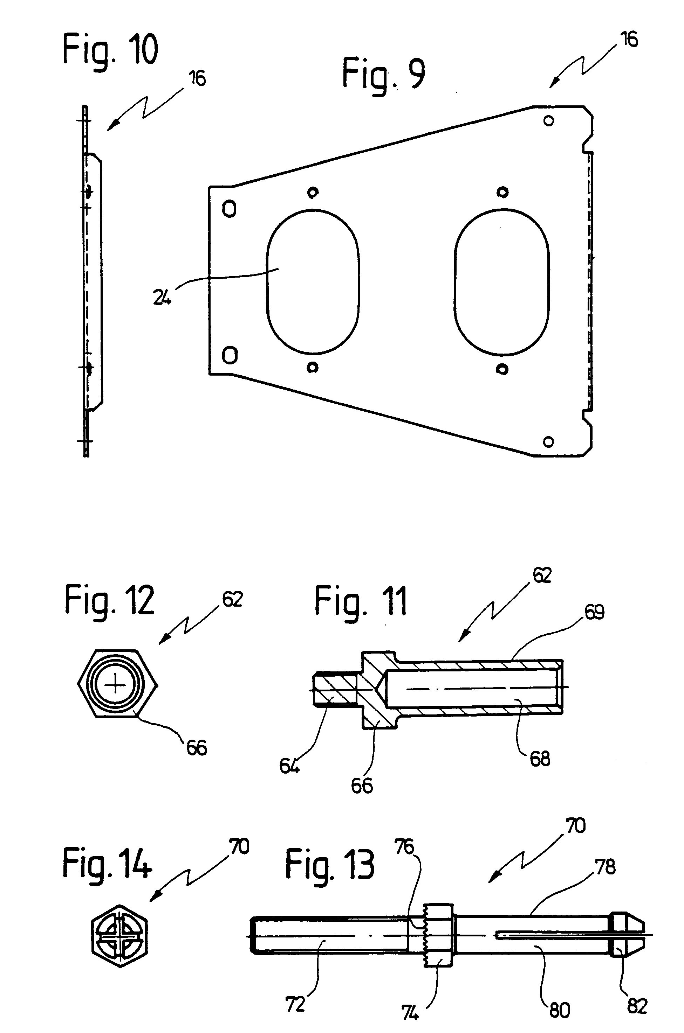

Die Form eines Seitenbleches 16 ist aus den Fig. 9 und 10 ersichtlich. Das Seitenblech 16 weist eine trapezförmige Grundform auf, wobei der frontplattenseitige Bereich in jeweils zwei parallele Ränder übergeht und der bodenplattenseitige, gleichfalls in zwei parallele Ränder übergeht. Vom frontplattenseitigen Bereich aus verjüngt sich das Seitenblech 16 in Richtung zum bodenseitigen Bereich hin. Der frontplattenseitige Rand der Zwischenplatte 16 ist um 90° nach innen in Richtung zur Frontplatte hin abgewinkelt.

Ferner sind zwei ovale Ausnehmungen 24 gleicher Form und Größe parallel nebeneinander zwischen dem frontplattenseitigen Ende und dem bodenseitigen Ende des Seitenbleches 16 angeordnet.

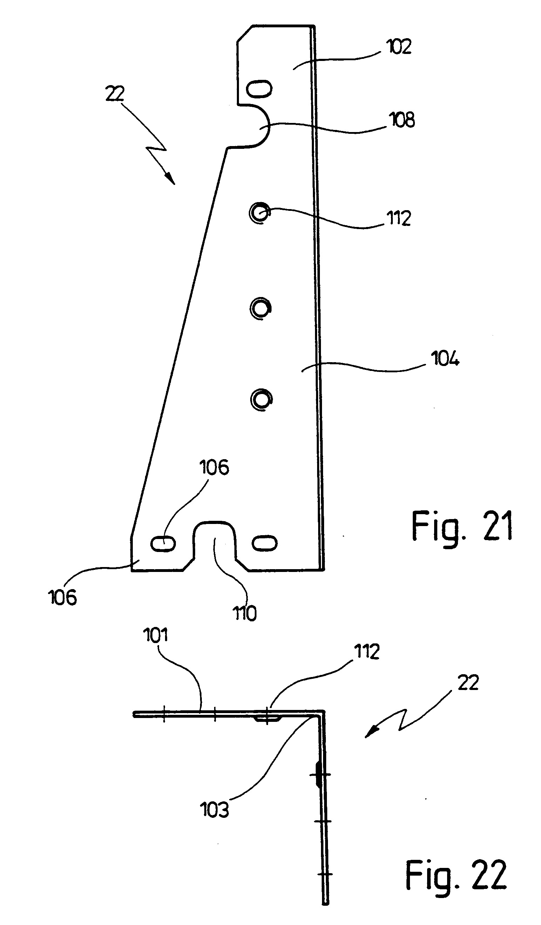

Das in den Fig. 21 und 22 dargestellte Winkelblech 22 ist an seinen Rändern entsprechend abgeschrägt, so daß sich eine Anpassung an die Schrägen der Seitenbleche 16, 18, 34 ergibt. Das Winkelblech 22 weist zwei identische Seitenschenkel 101 auf, welche rechtwinklig zueinander gebogen sind. Jeder Seitenschenkel 101 besitzt einen ersten frontseitigen Abschnitt 102, der parallel zur Biegekante 103 verläuft. Der erste Abschnitt 102 geht über eine U-förmige Ausnehmung 108 in einen zweiten Abschnitt 104 über, dessen Rand von der Biegekante 103 aus in Richtung zum Bodenblech 20, 33, 84 schräg nach außen verläuft. Der zweite Abschnitt 104 geht schließlich in einen dritten, an das Bodenblech 20, 33, 84 angrenzenden Abschnitt 106 über, dessen Rand wiederum parallel zur Biegekante 103 verläuft. Bodenseitig sind zwei Langlöcher 106 vorgesehen, zwischen denen eine U-förmige Ausnehmung 110 angeordnet ist. Parallel zur Biegekante sind im mittleren Bereich drei Gewindebohrungen 112 vorgesehen, während im frontplattenseitigen Bereich 102 neben der U-förmigen Ausnehmung 108 ein weiteres Langloch 106 angeordnet ist.

Die Form eines Bodenbleches 84 ist aus den Fig. 15 und 16 näher ersichtlich. Das rechteckige Bodenblech 84 ist an seinen Rändern 88 gemäß Fig. 16 um jeweils 90° in Richtung zur Frontplatte hin gebogen. An den Rändern 88 sind Gewindebohrungen 90 zur Verbindung mit den Seitenblechen und den Winkelblechen vorgesehen. Das Winkelblech 22 wird also über seine beiden bodenseitigen Langlöcher 106 mit entsprechenden Gewinden 90 der Ränder 88 des Bodenbleches 84 verschraubt. Zwischen jeweils zwei Winkelblechen 22 wird ein Seitenblech 16 gleichfalls über Langlöcher mit dem Rand 88 des Bodenbleches 84 verschraubt.

Bei den Gehäuseeinheiten mit doppelter oder dreifacher Modulbreite gemäß Fig. 1 ergeben sich ein entsprechend verbreitertes Bodenblech 20 bzw. 33 mit rechteckförmiger Grundfläche und entsprechend verbreiterte Seitenbleche 18 bzw. 34.

Der Aufbau der Eckverbinder 14 ist aus den Fig. 17 und 18 näher ersichtlich. Der Eckverbinder 14 weist zwei identische Schenkel 93 auf, welche rechtwinklig zueinander angeordnet sind. Der Eckverbinder 14 ist im Übergangsbereich zwischen den beiden Schenkeln 93 etwas verbreitert und in diesem Bereich von einem Innengewinde 26 durchsetzt. Zusätzlich sind an den Seitenflächen des Eckverbinders 14 verschiedene Gewinde 92 zur Verbindung mit den Winkelblechen 22 bzw. den Seitenblechen 16, 18, 34 vorgesehen.

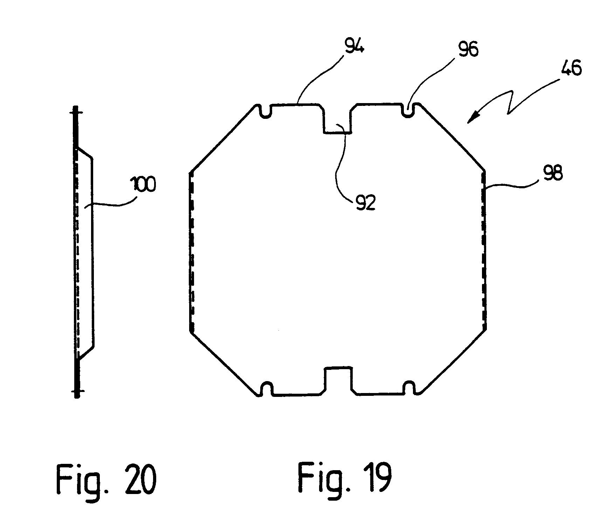

In den Fig. 19 und 20 ist eine Zwischenplatte 46 dargestellt, welche zusammen mit der Stelleinrichtung 36 verwendbar ist. Die Zwischenplatte 46 weist an zwei gegenüberliegenden Rändern 98 jeweils einen Winkelansatz 100 auf. An den beiden anderen um 90° gegenüber den ersten Rändern 98 versetzten Rändern 94 ist jeweils in der Mitte eine rechteckförmige Ausnehmung 92 für den Gewindestift 56 der Stelleinrichtung 36 vorgesehen. Seitlich daneben sind zwei U-förmige Ausnehmungen 96 zur Aufnahme von Schraubköpfen für die Verschraubung mit den Tiefeneinstellern 36 vorgesehen. Die Ecken des Zwischenbodens 46 sind abgeschrägt, so daß sich insgesamt eine oktaedrische Grundform ergibt.

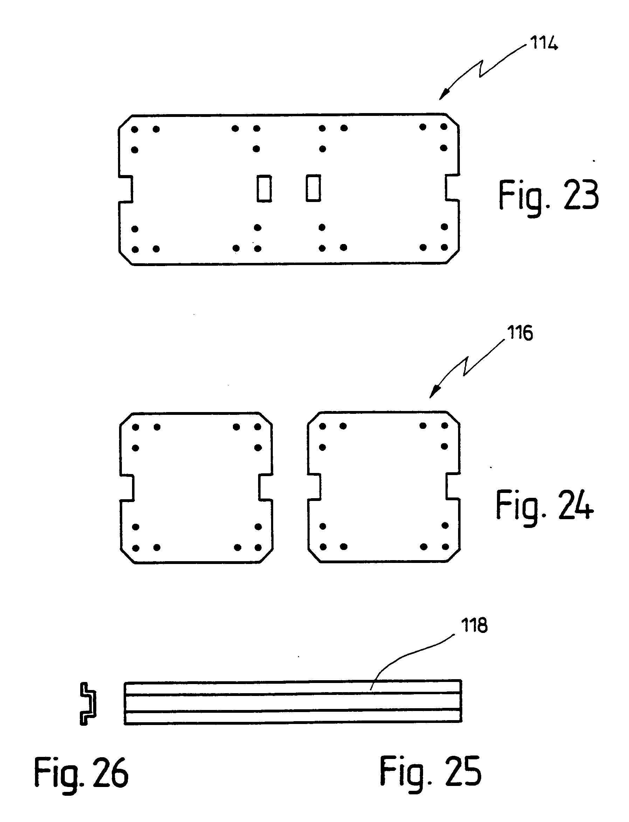

Die Fig. 23 und 24 zeigen Montageplatten 114 bzw. 116, die zum Einbau in die erste Gehäuseeinheit 12 geeignet sind. Während sich die Montageplatte 114 über die gesamte Gehäusegröße erstreckt, können zwei Montageplatten 116 quadratischer Grundform nebeneinander auf der Bodenplatte 20 der ersten Gehäuseeinheit 12 befestigt werden, wozu die Schweißmuttern 28 auf der Bodenplatte 20 vorgesehen sind.

Fig. 25 zeigt eine Rastschiene 118, die am Bodenblech 20, 33, 84 befestigt werden kann. Vorzugsweise werden zwei parallele Rastschienen 118 nebeneinander angeordnet. Neben dem aus Fig. 26 ersichtlichen Querschnitt sind auch andere Querschnittsformen möglich, um Einbauelemente rastbar an den Rastschienen 118 festzulegen.

Die Fig. 11 bis 14 zeigen eine Schutzleiterbuchse 62 und einen Schutzleiterstecker 70, die zur Erdung der Frontplatte geeignet sind. Die Schutzleiterbuchse gemäß den Fig. 11 und 12 weist einen Gewindestutzen 64 auf, der in das Gewinde 26 eines Eckverbinders 14 einschraubbar ist. An den Gewindestutzen 64 schließt sich ein Außenmehrkant 66 an, der sich in Form eines etwas schmaleren Kupplungsteils 69 nach außen fortsetzt. Über den Außenmehrkant 66 kann die Schutzleiterbuchse 62 über eine jeweils in der Ecke der Frontplatte vorgesehene Öffnung mit dem Gewinde 26 des Eckverbinders 14 verschraubt werden. Im Kupplungsteil 69 ist eine Sacklochbohrung vorgesehen, in die ein Erdungsstecker einsteckbar ist, über den die Frontplatte geerdet wird.

Eine leicht abgewandelte Ausführung zeigen die Fig. 13 und 14, wobei anstelle einer Schutzleiterbuchse ein Schutzleiterstecker 70 vorgesehen ist. Auch hierbei ist ein Gewindestutzen 72 vorgesehen, der in das Gewinde 26 eines Eckverbinders 14 einschraubbar ist. Zur Handhabung dient gleichfalls ein Außenmehrkant 74, der als Sechskant ausgebildet ist. Um einen verbesserten Kontakt der Schulter des Außenmehrkants 74 mit der Frontplatte zu gewährleisten, weist die Schulter eine Riffelung 76 auf. Beim Festziehen des Schutzleitersteckers 70 auf dem Gewinde 26 des Eckverbinders 14 reibt sich der Außenmehrkant 74 mit der Riffelung 76 in die Oberfläche der Frontplatte ein, wodurch eine sichere elektrische Verbindung gewährleistet ist.

An den Außenmehrkant 74 des Schutzleitersteckers 70 schließt sich ein Steckerteil 78 an, dessen vorderer Bereich aus vier zueinander quergeschlitzten Federzungen 80 besteht, an deren vorderen Enden jeweils ein etwas verdickter Kopf 82 vorgesehen ist. Auf den Schutzleiterstecker 70 kann eine Erdungsbuchse zur Erdung der Frontplatte aufgesteckt werden.

## Patentansprüche

1. Einbaugehäuse zum versenkten Einbau von Elektroinstallationen in eine Frontfläche, mit mindestens einem Bodenelement (20, 33, 84) und mit Seitenelementen (16, 18, 34), die über Winkelelemente (14, 22) lösbar verbunden sind, dadurch gekennzeichnet, daß zumindestens eine Stelleinrichtung (36) zur Tiefeneinstellung von Zwischenböden (46, 50) oder Einbauteilen vorgesehen ist.

2. Einbaugehäuse nach Anspruch 1, dadurch gekennzeichnet, daß das Gehäuse (10) aus einer Mehrzahl von Gehäuseelementen (12, 32) modulartig zusammensetzbar ist, wobei jedes Gehäuseelement (12, 32) als Vielfaches eines Grundmoduls mit quadratischer oder rechteckiger Grundfläche ausgebildet ist.

3. Einbaugehäuse nach Anspruch 2, dadurch gekennzeichnet, daß mehrere Gehäuseeinheiten (12, 32) über Verbindungselemente (44) zu einem Gehäuse (10) verbunden sind.

4. Einbaugehäuse nach einem der vorhergehenden Ansprüche, dadurch gekennzeichnet, daß die Winkelelemente jeweils ein Winkelblech (22) und einen Eckverbinder (14) aufweisen, daß die Winkelbleche (22) bodenseitig mit dem Bodenelement (20, 33, 84) verbunden sind, und daß die Eckverbinder (14) frontseitig mit den Winkelblechen (22) und den Seitenelementen (16, 18, 34) verbunden sind.

5. Einbaugehäuse nach Anspruch 4, dadurch gekennzeichnet, daß jedes Winkelblech (22) zwei Seitenschenkel (101) aufweist, welche rechtwinklig zueinander gebogen sind, und daß sich jeder Seitenschenkel (101) von der Frontseite aus gesehen in Richtung zum Bodenelement (22, 33, 84) hin verbreitert.

6. Einbaugehäuse nach einem der vorhergehenden Ansprüche, dadurch gekennzeichnet, daß Stelleinrichtungen (36) im geeigneten Abstand zur Aufnahme eines 19-Zoll-Einbaurahmens (40) vorgesehen sind.

7. Einbaugehäuse nach einem der vorhergehenden Ansprüche, dadurch gekennzeichnet, daß jede Stelleinrichtung (36) eine Befestigungsplatte (52) aufweist, auf der ein Schlitten (54) über ein Gewinde (56, 58) in Längsrichtung verstellbar angeordnet ist.

8. Einbaugehäuse nach Anspruch 7, dadurch gekennzeichnet, daß der Schlitten (54) frontplattenseitig einen Winkelansatz (63) aufweist.

9. Einbaugehäuse nach einem der vorhergehenden Ansprüche, dadurch gekennzeichnet, daß die Eckverbinder (14) jeweils im Eckbereich eine Gewindebohrung (26) zur Schraubverbindung mit einer Frontplatte aufweisen.

10. Einbaugehäuse nach einem der vorhergehenden Ansprüche, dadurch gekennzeichnet, daß in die Gewindebohrungen (26) Schutzleiterbuchsen (62) oder Schutzleiterstecker (70) zur Befestigung der Frontplatte und zur Erdung derselben einschraubbar sind.

11. Einbaugehäuse nach Anspruch 10, dadurch gekennzeichnet, daß die Schutzleiterbuchsen (62) und die Schutzleiterstecker (70) jeweils einen in die Gewindebohrung (26) eines Eckverbinders (14) einschraubbaren Gewindestutzen (64, 72) aufweisen, an den sich eine Schulter mit einem Außenmehrkant (66, 74) anschließt.

12. Einbaugehäuse nach einem der Ansprüche 1 - 11, dadurch gekennzeichnet, daß sich an den Außensechskant (66) ein nach außen von der Frontplatte vorstehendes Kupplungsteil (69) mit einer Sacklochbohrung (68) zur Aufnahme eines Schutzleitersteckers anschließt.

13. Einbaugehäuse nach einem der Ansprüche 1 - 11, dadurch gekennzeichnet, daß sich an den Außenmehrkant (74) ein nach außen von der Frontplatte vorstehendes Steckerteil (78) mit Federzungen (80) anschließt.

14. Einbaugehäuse nach einem der Ansprüche 11 bis 13, dadurch gekennzeichnet, daß an der gewindeseitigen Schulter eine Riffelung (76) vorgesehen ist.

15. Einbaugehäuse nach einem der vorhergehenden Ansprüche, dadurch gekennzeichnet, daß die Seitenelemente (16, 18, 34) Ausnehmungen (24) zur Durchführung von Kabeln aufweisen.

16. Einbaugehäuse nach Anspruch 15, dadurch gekennzeichnet, daß Platten mit Kabelführungen auf die Ausnehmungen (24) aufschraubbar sind.

17. Einbaugehäuse nach einem der vorhergehenden Ansprüche, dadurch gekennzeichnet, daß am Bodenblech (20, 33, 84) oder den Seitenblechen (16, 18, 34) Rastschienen (118) zur Aufnahme von Einbauteilen festlegbar sind.

## Claims

1. Mounting housing for recessed mounting of electrical installations into a front face, with at least one base element (20, 33, 84) and with side elements (16, 18, 34) which are joined, so as to be separable, by means of angle elements (14, 22), characterized in that there is at least one adjusting device (36) for setting the height of intermediate bases (46, 50) or built-in components.

2. Mounting housing according to Claim 1, characterized in that the housing (10) can be composed, in modular fashion, from a multiplicity of housing elements (12, 32), each housing element (12, 32) being constructed as a multiple of a basic module having a square or rectangular base.

3. Mounting housing according to Claim 2, characterized in that several housing units (12, 32) are joined by means of joining elements (44) to form one housing (10).

4. Mounting housing according to any one of the preceding Claims, characterized in that each of the angle elements possesses an angle plate (22) and a corner connector (14), in that the angle plates (22) are joined at the base end to the base element (20, 33, 84) and in that the corner connectors (14) are joined at the front end to the angle plates (22) and the side elements (16, 18, 34).

5. Mounting housing according to Claim 4, characterized in that each angle plate (22) has two side arms (101), bent at right angles to each other, and in that each side arm (101) widens towards the base element (22, 33, 84), as viewed from the front end.

6. Mounting housing according to any one of the preceding Claims, characterized in that there are appropriately spaced adjusting devices (36) for holding a 19 inch mounting frame (40).

7. Mounting housing according to any one of the preceding Claims, characterized in that each adjusting device (36) possesses a fixing plate (52) upon which there is disposed a slide (54) which is capable of adjustment in the longitudinal direction by means of a thread (56, 58).

8. Mounting housing according to Claim 7, characterized in that the slide (54) possesses an angle projection (63) on the front panel side.

9. Mounting housing according to any one of the preceding Claims, characterized in that there is a threaded hole (26) in the corner area of each of the corner connectors (14) for providing a screwed connection with a front panel.

10. Mounting housing according to any one of the preceding Claims, characterized in that protective conductor sockets (62) or protective conductor plug connectors (70) can be screwed into the threaded holes (26) for the purpose of fixing and earthing the front panel.

11. Mounting housing according to Claim 10, characterized in that the protective conductor sockets (62) and the protective conductor plug connectors (70) each have a threaded connection piece (64, 72) which can be screwed into the threaded hole (26) of a corner connector (14) and which is adjoined by a shoulder with an external polygon (66, 74).

12. Mounting housing according to any one of Claims 1 to 11, characterized in that the external hexagon (66) is adjoined by a coupling part (69), projecting outwards from the front panel, with a blind hole (68) for holding a protective conductor plug connector.

13. Mounting housing according to any one of Claims 1 to 11, characterized in that the external polygon (74) is adjoined by a plug connector part (78), projecting outwards from the front panel, with flexible tongues (80).

14. Mounting housing according to any one of Claims 11 to 13, characterized in that there is fluting (76) on the shoulder next to the thread.

15. Mounting housing according to any one of the preceding Claims, characterized in that the side elements (16, 18, 34) have recesses (24) for the passage of cables.

16. Mounting housing according to Claim 15, characterized in that plates with cable guides can be screwed on to the recesses (24).

17. Mounting housing according to any one of the preceding Claims, characterized in that locating rails (118) can be fixed to the base plate (20, 33, 84) or the side plates (16, 18, 34) for holding built-in components.

## Revendications

1. Boîtier encastrable pour le montage encastré d'installations électriques, avec au moins un élément de fond (20, 33, 84) et avec des éléments latéraux (16, 18, 34), assemblés de façon démontable par l'intermédiaire d'éléments angulaires (14, 22), caractérisé en ce qu'il est prévu au moins un dispositif de réglage (36) pour le réglage en profondeur de cloisons (46, 50) ou d'inserts.

2. Boîtier encastrable selon la revendication 1, caractérisé en ce que le boîtier (10) peut être assemblé de façon modulaire à partir d'une pluralité d'éléments de boîtier (12, 32), chaque élément de boîtier (12, 32) étant conçu comme un multiple d'un module de base, de surface de base carrée ou rectangulaire.

3. Boîtier encastrable selon la revendication 2, caractérisé en ce que plusieurs unités de boîtier (12, 32) sont reliées par des éléments de liaison (44) pour former un boîtier (10).

4. Boîtier encastrable selon la revendication selon l'une des revendications précédentes, caractérisé en ce que les éléments angulaires présentent chacun une tôle d'angle (22) et un raccord d'angle (14), en ce que les tôles d'angle (22) sont reliées du côté du fond avec l'élément de fond (20, 33, 84), et en ce que les raccords d'angle (14) sont reliés du côté avant avec les tôles d'angle (22) et avec les éléments latéraux (16, 18, 34).

5. Boîtier encastrable selon la revendication 4, caractérisé en ce que chaque tôle d'angle (22) présente deux ailes latérales (101) qui sont repliées à angle droit l'une par rapport à l'autre, et en ce que chaque aile latérale s'élargit en direction de l'élément de fond (22, 33, 84), vue de l'avant.

6. Boîtier encastrable selon l'une des revendications précédentes, caractérisé en ce que des dispositifs de réglage (36) sont prévus à une distance appropriée pour recevoir un cadre de montage de 19 pouces (40).

7. Boîtier encastrable selon l'une des revendications précédentes, caractérisé en ce que chaque dispositif de réglage (36) présente une plaque de fixation (52) sur laquelle un patin (54) est disposé avec possibilité de déplacement dans le sens longitudinal à l'aide d'un filetage (56, 58).

8. Boîtier encastrable selon la revendication 7, caractérisé en ce que le patin (54) présente, du côté de l'avant, une saillie en angle (63).

9. Boîtier encastrable selon l'une des revendications précédentes, caractérisé en ce que les raccords d'angle (14) présentent chacun dans une zone d'angle un trou taraudé (26) destiné au vissage sur un panneau avant.

10. Boîtier encastrable selon l'une des revendications précédentes, caractérisé en ce que des douilles de conducteur de protection (62) ou des fiches de conducteur de protection (70) peuvent être vissées dans les trous taraudés (26) pour la fixation du panneau avant et la mise à la terre de celui-ci.

11. Boîtier encastrable selon la revendication 10, caractérisé en ce que les douilles de conducteur de protection (62) et les fiches de conducteur de protection (70) présentent chacune un manchon fileté (64, 72) qui peut être vissé dans le trou taraudé (26) d'un raccord d'angle (14) et auquel se raccorde un épaulement pourvu d'une conformation polygonale extérieure (66, 74).

12. Boîtier encastrable selon l'une des revendications 1 à 11, caractérisé en ce qu'une partie d'accouplement (69) faisant saillie vers l'extérieur à partir du panneau avant et pourvue d'un trou borgne (68) se raccorde à la conformation polygonale extérieure (66) en vue de recevoir une fiche de conducteur de protection.

13. Boîtier encastrable selon l'une des revendications 1 à 11, caractérisé en ce qu'une partie de fiche (78) pourvue de languettes élastiques (80) qui fait saillie vers l'extérieur à partir du panneau avant se raccorde à la conformation polygonale extérieure (74).

14. Boîtier encastrable selon l'une des revendications 11 à 13, caractérisé en ce qu'un rainurage (76) est prévu sur l'épaulement situé du côté du filetage.

15. Boîtier encastrable selon l'une des revendications précédentes, caractérisé en ce que les éléments latéraux (16, 18, 34) présentent des évidements (24) pour le passage de câbles.

16. Boîtier encastrable selon la revendication 15, caractérisé en ce que des plaques pourvues de passages de câbles peuvent être vissées sur les évidements (24).

17. Boîtier encastrable selon l'une des revendications précédentes, caractérisé en ce que des rails d'encliquetage (118) peuvent être fixés sur la tôle de fond (20, 33, 84) ou les tôles latérales (16, 18, 34) pour recevoir des inserts.
